# EUROPEAN PATENT SPECIFICATION

(11) **EP 4 483 647 B1**
(45) Date of publication and mention of the grant of the patent: **09.12.2026**
(21) Application number: 22950737.1
(22) Date of filing: 15.07.2022
(51) Int. Cl.: H04L 65/1016, H04L 65/1063, H04L 65/1073, H04L 65/1069, H04L 65/1104

(54) **SELECTION OF DATA CHANNEL CAPABLE P-CSCF**
AUSWAHL EINER P-CSCF-FÄHIGEN DATENKANALKENNUNG
SÉLECTION D'UN CANAL DE DONNÉES CAPABLE DE RÉALISER UNE FONCTION P-CSCF

(43) Date of publication of application: 01.01.2025
(73) Proprietor: ZTE Corporation, Shenzhen Guangdong 518057 (CN)
(72) Inventor: LI, Zhijun, Shenzhen, Guangdong 518057 (CN); DONG, Hao, Shenzhen, Guangdong 518057 (CN); HONG, Jun, Shenzhen, Guangdong 518057 (CN)
(74) Representative: Boult Wade Tennant LLP
(86) International application number: PCT/CN2022/106077
(87) International publication number: WO 2024/011619

(56) References cited:
- CN-A- 112 087 780
- US-A1- 2019 261 449
- US-A1- 2020 178 336
- US-A1- 2022 141 261
- ERICSSON ET AL: "EDC related PCO parameters usage", vol. CT WG1, no. E-meeting; 20220117 - 20220121, 4 March 2022 (2022-03-04), XP052121796, Retrieved from the Internet <URL:https://ftp.3gpp.org/3guInternal/3GPP_Ultimate_CRPacks/CP-220252.zip 24501_CR3848r1_(Rel-17)_C1-220793-was-C1-220126-v02.docx> [retrieved on 20220304]
- HUAWEI, HISILICON: "IMS data channel registration", 3GPP TSG-CT WG1 MEETING #133-E, C1-217348, 18 November 2021 (2021-11-18), XP052077733

## Description

### TECHNICAL FIELD

This document is directed generally to wireless communications, and in particular to 5^{th} generation (5G) communications or 6^{th} generation (6G) communications.

### SUMMARY

IP (Internet Protocol) Multimedia Subsystem (IMS) service, running on top of IP connectivity service based on e.g., 4G (4^{th} generation) PDN (Packet Data Network) service or 5G PDU (Protocol Data Unit) service, provides multimedia telephony services in which various media types (e.g., speech, video and text) can be integrated in one IMS session. However, in some approaches, due to lack of on demand interactive ability to the IMS client, the multimedia telephony service is difficult to support new trend of interactive services within an IMS session (e.g., screen sharing, interactive games, selective information pushing, etc.).

D1-US2022141261A1 discloses a solution for establishing a data traffic session ( e.g., a voice call or a video call) for a user equipment (UE) on a network (e.g., a 5G cellular network) comprises: receiving, by a session management node, from a network repository, identification of a first session control node and a second session control node; receiving, by the session management node, from the UE, a request for identifying a session control node for supporting the data traffic session; determining whether the first session control node is available; and based on at least determining that the first session control node is available and not determining that the second session control node is available, sending, by the session management node, to the UE, dentification of the first session control node and not sending identification of the second session control node.

ERICSSON ET AL: "EDC related PCO parameters usage " ,3GPP DRAFT CP-220252,3RD GENERATION PARTNERSHIP PROJECT(3GPP) C1-220793 discloses UE executes case a) orb):1) if the UE supports ATSSS Low-Layer functionality with any steering mode as specified in subclause 5.32.6 of 3GPP TS 23.501 [8], the UE shall set the ATSSS-ST bits to "ATSSS Low-Layer functionality with any steering mode supported" in the 5GSM capability IE of the PDU SESSION MODIFICATION REQUEST message.

This document relates to methods, systems, and devices for data channel media.

One aspect of the present disclosure relates to a wireless communication method. In an embodiment, the wireless communication method includes: transmitting, by a wireless communication terminal to a session management node, a Proxy Call Service Control Function, P-CSCF, address request indication; and receiving, by the wireless communication terminal from the session management node, a P-CSCF address list in response to the P-CSCF address request indication, wherein at least one P-CSCF indicated in the P-CSCF address list has a data channel capability.

Another aspect of the present disclosure relates to a wireless communication method. In an embodiment, the wireless communication method includes: transmitting, by a Domain Name System, DNS, server to a DNS client, a P-CSCF address list, wherein at least one P-CSCF indicated in the P-CSCF address list has a data channel capability.

Another aspect of the present disclosure relates to a wireless communication method. In an embodiment, the wireless communication method includes: receiving, by a Domain Name System, DNS, client from a DNS server, a P-CSCF address list, wherein at least one P-CSCF indicated in the P-CSCF address list has a data channel capability.

Another aspect of the present disclosure relates to a wireless communication terminal. In an embodiment, the wireless communication terminal includes a communication unit and a processor. The processor is configured to: transmit, to a session management node, a Proxy Call Service Control Function, P-CSCF, address request indication; and receive, from the session management node, a P-CSCF address list in response to the P-CSCF address request indication, wherein at least one P-CSCF indicated in the P-CSCF address list has a data channel capability.

Another aspect of the present disclosure relates to a session management node. In an embodiment, the session management node includes a communication unit and a processor. The processor is configured to: receive, from a wireless communication terminal, a Proxy Call Service Control Function, P-CSCF, address request indication; and transmit, to the wireless communication terminal, a first P-CSCF address list in response to the P-CSCF address request indication, wherein at least one P-CSCF indicated in the first P-CSCF address list has a data channel capability.

Another aspect of the present disclosure relates to a Domain Name System, DNS, server. In an embodiment, the Domain Name System, DNS, server includes a communication unit and a processor. The processor is configured to: transmitting, to a DNS client, a P-CSCF address list, wherein at least one P-CSCF indicated in the P-CSCF address list has a data channel capability.

Another aspect of the present disclosure relates to a Domain Name System, DNS, client. In an embodiment, the Domain Name System, DNS, client includes a communication unit and a processor. The processor is configured to: receive, from a DNS server, a P-CSCF address list, wherein at least one P-CSCF indicated in the P-CSCF address list has a data channel capability.

The present disclosure relates to a computer program product comprising a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

### BRIEF DESCRIPTION OF THE DRAWING(S)

The above and other aspects and their implementations are described in greater detail in the drawings, the descriptions, and the claims.
FIG. 1 shows a schematic diagram of a network according to an embodiment of the present disclosure.
FIG. 2 shows schematic diagram of a procedure according to an embodiment of the present disclosure.
FIG. 3 shows schematic diagram of a procedure according to an embodiment of the present disclosure.
FIG. 4 shows schematic diagram of a procedure according to an embodiment of the present disclosure.
FIG. 5 shows an example of a schematic diagram of a wireless communication terminal according to an embodiment of the present disclosure.
FIG. 6 shows an example of a schematic diagram of a wireless communication node according to an embodiment of the present disclosure.

### DETAILED DESCRIPTION

In some embodiments, to improve the user experience of IMS services, a new media type named "data channel media" may be used. The data channel media provides an unformatted data container to encapsulate specific protocols and contents. For example, an interactive UI (user interface) presented in a combination of HTML, Javascript, and CSS languages can be used by the server to exchange interactive UI information with the user and collect actions from the user. To simplify the reference of this capability of supporting data channel media in the IMS UE (user equipment) and the IMS network, a term of "IMS data channel" may be used.

To support the IMS data channel, some network functions in the packet core network domain (e.g., an SMF (Session Management Function), a UPF (User Plane Function), a PCF (Policy Control Function), etc.) may be enhanced. For example, these network functions may support the QFI(s) (QoS (quality of service) Flow Identifier(s)) used specific for the IMS data channel. In the IMS network domain, enhancements may be required to some network elements (e.g., P-CSCF (Proxy-Call Session Control Function), IMS-AGW (IMS Access Gateway), etc). For example, the P-CSCF may support the data channel capability negotiation with the IMS UE in the IMS registration.

During the PDN (Packet Data Network) connection establishment in 4G or PDU (protocol data unit) session establishment in 5G, the packet core network (i.e., the PGW in 4G, the SMF in 5G) may return a P-CSCF address list to the UE if the UE indicates the "P-CSCF address request" indication to the network.

In some approaches, it may assume that all P-CSCFs deployed in a PLMN (Public land mobile network) are configured with the same capability of the IMS data channel. However, it is difficult for an operator to upgrade all its P-CSCFs in the entire PLMN.

If only a part of the P-CSCFs are upgraded with the IMS data channel support while the UE does not know which P-CSCF supports the IMS data channel from the P-CSCF address list provided by the network, the UE may have to try each P-CSCF by invoking the IMS registration procedure repeatedly to find a correct one. In such case, unnecessary complexity is caused to the IMS registration to select one P-CSCF supporting the IMS data channel.

Some embodiments of the present disclosure allow the network to provide a P-CSCF address list in which at least one P-CSCF supports the IMS data channel. Accordingly, the UE can quickly select the correct P-CSCF for initiating the IMS data channel service.

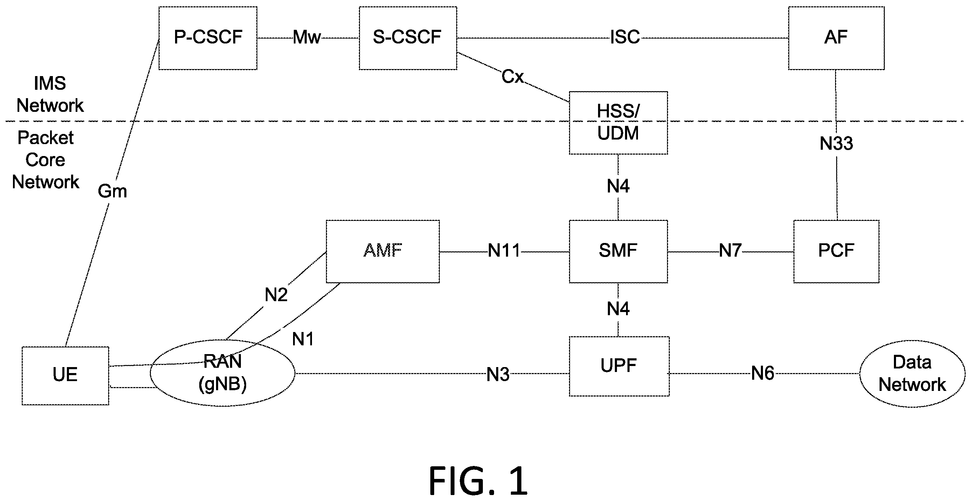

FIG. 1 shows a schematic diagram of a network (architecture) according to an embodiment of the present disclosure. In FIG. 1, there are the following network functions in packet core network domain and IMS network domain:
Network functions in the packet core network domain:
1) User Equipment (UE).
2) Radio Access Network (RAN).

In the 5G network, the RAN is a new radio (NR) base station, which is also named gNB (gNodeB).

### 3) Access and Mobility Management function (AMF):

This function includes the following functionalities: registration management, connection management, reachability management and mobility management. This function also performs the access authentication and the access authorization. The AMF is the NAS (Non-Access-Stratum) security termination and relay the SM (Session Management) NAS between the UE and the SMF, etc.

### 4) Session Management Function (SMF):

This function includes the following functionalities: session establishment, modification and release, UE IP address allocation and management (including optional authorization functions), selection and control of the UP (user plane) function, downlink data notification, etc. The SMF controls the UPF via the N4 association.

### 5) User Plane Function (UPF):

This function includes the following functionalities: serving as an anchor point for the intra-/inter-radio access technology (RAT) mobility, packet routing and forwarding, traffic usage reporting, QoS handling for the user plane, downlink packet buffering and downlink data notification triggering, etc. The UPF maybe deployed as the I-UPF (Intermediate UPF) or the PDU Session Anchor (PSA). The PSA (e.g., the UPF) is the UPF terminating the N6 interface towards the data network. The I-UPF provides a traffic forwarding function between the RAN and the PSA (e.g., the UPF). The I-UPF may support "ULCL" (Uplink Classifier, which offloads the uplink traffic based on the target IP address) or "BP" (Branching Point, which offloads the uplink traffic based on the source IP address) to offload some traffic to the local PSA (e.g., the UPF).

### 6) Policy Control Function (PCF):

The PCF provides QoS policy rules to the control plane functions to enforce the rules. The PCF(s) transform(s) the AF (Application Function) requests into policies that apply to PDU Sessions. The PCF provides the AF influenced Traffic Steering Enforcement Control in PCC (Policy and Charging Control) rules to the SMF, so that the SMF can establish the data path to offload the traffic to the local data network.

### 7) Application Function (AF):

The AF interacts with the 3GPP (the 3^{rd} Generation Partnership Project) Core Network in order to provide services, for example, to support application influence on traffic routing. Based on the operator deployment, Application Functions considered to be trusted by the operator can be allowed to directly interact with relevant Network Functions. Application Functions not allowed by the operator to directly access the Network Functions may use the external exposure framework via the NEF (Network Exposure Function) to interact with relevant Network Functions.

Network functions in the IMS network domain:

### 8) P-CSCF, Proxy CSCF (Call Service Control Function).

The P-CSCF provides an entry to the IMS network and controls the IMS registration towards the UE.

### 9) S-CSCF, Serving CSCF (Call Service Control Function).

The S-CSCF handles the service logic of the IMS session and forwards the IMS session to the SIP (Session Initiation Protocol) AS (Application Function).

### 10) AS, Application Function.

The AS provides the service specific to logic handling for an IMS session.

In 5G procedures, when the IMS UE requests PDU session establishment for IMS service, the network (i.e., SMF) may provide a P-CSCF list to the UE. Accordingly, the UE selects one P-CSCF from the list and initiates IMS registration procedure.

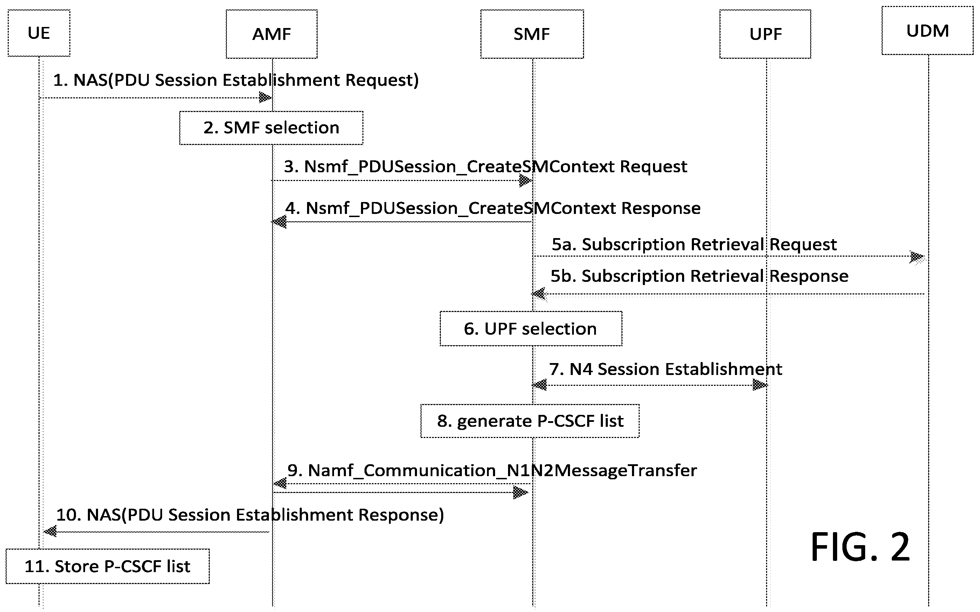

FIG. 2 shows a schematic diagram of a PDU session establishment procedure for the IMS service according to an embodiment of the present disclosure.

After the UE registers to the 5G network, the UE can request a PDU session establishment procedure, with the following steps:
1. The UE transmits to the AMF the NAS Message (e.g., including at least one of S-NSSAI(s) (Single Network Slice Selection Assistance Information), a UE Requested DNN (Data Network Name), a PDU Session ID (identifier), a Request type, and/or an N1 SM container (e.g., including a PDU Session Establishment Request)).

In an embodiment, the PDU Session Establishment Request is included in the NAS message and encapsulated in the N1 SM container. In an embodiment, the NAS message sent by the UE is encapsulated by the RAN (Radio Access Network) in a N2 message towards the AMF.

In an embodiment, if the PDU session is used for the IMS service, the UE may provide an IMS well-known DNN (e.g., the parameter or IE (information element) DNN is "IMS") to the network.

In an embodiment, if the UE requests the P-CSCF address allocation from the network, the NAS message may carry an appropriate P-CSCF request indication (e.g., a "P-CSCF IPv4 Address request" or a "P-CSCF IPv6 Address Request") in the PCO (Protocol Configuration Options) IE. In an embodiment, the PCO IE is transparently forwarded by the AMF to the SMF, so that the SMF can return the P-CSCF address list accordingly.

2. The AMF selects a proper SMF (i.e., an anchor SMF) to serve the PDU session based on the requested DNN, S-NSSAI, and the current UE location information. If the anchor SMF cannot serve the current location of the UE, the AMF may determine to select an I-SMF for the PDU session.

3. The AMF may transmit to the SMF an *Nsmf_PDUSession_CreateSMContext* Request (e.g., including at least one of an SUPI (Subscription Permanent Identifier), a selected DNN, a UE requested DNN, an S-NSSAI(s), a PDU Session ID, an AMF ID, a Request Type, an N1 SM container (e.g., including a PDU Session Establishment Request), User location information, an Access Type, an RAT (radio access technology) Type, a PEI (Permanent Equipment Identifier), and/or a GPSI (Generic Public Subscription Identifier)).

The SUPI (Subscription Permanent Identifier) uniquely identifies the UE subscription. The AMF ID carries the GUAMI (Globally Unique AMF ID) uniquely identifying the AMF serving the UE.

The selected DNN may be the same as the UE requested DNN as in step 1, or may be derived from the UE requested DNN by the DNN replacement functionality based on the interactions between the AMF and the PCF.

4. The SMF transmits to the AMF an *Nsmf_PDUSession_CreateSMContext* Response (e.g., including at least one of a cause and/or a SM Context ID). The SM Context ID identifies the SM context created in the SMF for the UE.

5a. The SMF sends the Subscription Retrieval Request message (i.e., an Nudm_SDM_Get Request) to the UDM, to retrieve the Session Management Subscription data.

5b. The UDM sends the Subscription Retrieval Response message to the SMF, carrying the Session Management Subscription data of the UE.

6. The anchor SMF selects an UPF acting as PSA.

7. The anchor SMF initiates an N4 Session Establishment procedure with the selected UPF.

8. If the SMF receives the P-CSCF address request from the UE in step 1, i.e., receives PCO IE including the appropriate P-CSCF request indication (e.g., a "P-CSCF IPv4 Address Request" or a "P-CSCF IPv6 Address Request" indication), the SMF may generate a list of an appropriate P-CSCF IP address which may be returned to the UE.

9. The SMF transmits to the AMF an *Namf_Communication_N1N2MessageTransfer* Request (e.g., including at least one of a PDU Session ID, N2 SM information (e.g., including at least one of a PDU Session ID, a QFI(s), a QoS Profile(s), N3 CN (core network) Tunnel Information), an N1 SM container (e.g., including a PDU Session Establishment Accept)).

In an embodiment, the N2 SM information carries information that the AMF may forward to the RAN, including at least one of the N3 CN Tunnel Information carrying I-UPF (Intermediate UPF) UL F-TEID (Fully qualified Tunnel Endpoint Identifier), the QFIs, and/or QoS profiles used by the RAN to setup QoS flows.

In an embodiment, the N1 SM container contains the PDU Session Establishment Accept that the AMF may send to the UE.

In an embodiment, if the SMF receives the P-CSCF address request from the UE in step 1, it may carry a list of P-CSCF IP address in the PCO IE included in the PDU Session Establishment Accept message.

10. The AMF sends an NAS message (e.g., including at least one of a PDU Session ID and/or an N1 SM container (e.g., including a PDU Session Establishment Accept)) to the UE. In an embodiment, the NAS message is encapsulated in the N1 message and forwarded by the RAN to the UE.

11. If a list of P-CSCF address is included in the PCO returned by the SMF within the PDU Session Establishment Accept message, the UE stores the P-CSCF address list in its local storage and may later select one to initiate IMS registration.

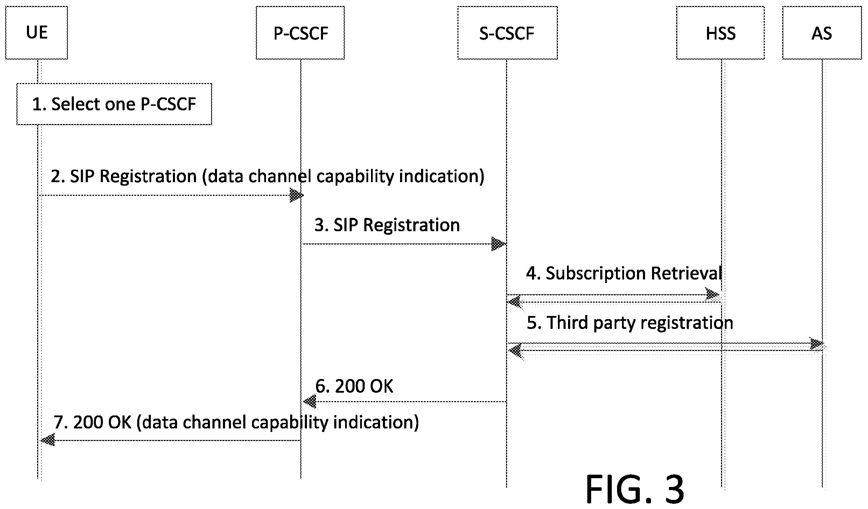

FIG. 3 shows a schematic diagram of a capability negotiation for the IMS data channel according to an embodiment of the present disclosure.

Once the UE gets a P-CSCF address list from the network, it can select one P-CSCF to initiate the IMS registration, with the following steps:
1. The UE selects one P-CSCF from the stored P-CSCF address list, which is retrieved from the network in step 10 corresponding to FIG. 2 described above.
2. The UE sends an SIP Registration request to the selected P-CSCF. If the UE supports the IMS data channel, the SIP Registration request carries a data channel capability indication in the SIP Registration request. In an embodiment, the UE may indicate an attribute of "sip.app-subtype" having a value of "webrtc-datachannel" (i.e., +sip.app-subtype="webrtc-datachannel") in the Contact field of the SIP Registration message.
3. The P-CSCF forwards the SIP Registration request to the S-CSCF.
4. The S-CSCF fetches UE subscription data from the HSS (Home Subscriber Server). The UE subscription data may indicate whether the UE is subscribed with an IMS data channel service.
5. If a third party registration is required, as indicated by the UE subscription data, the S-CSCF triggers a third party registration to the corresponding SIP AS.
6. If the registration is successful, the S-CSCF returns a SIP "200 OK" response to the P-CSCF.
7. The P-CSCF returns the SIP "200 OK" response to the UE. In the SIP "200 OK" response, the P-CSCF carries a data channel capability indication if the P-CSCF supports the IMS data channel. In an embodiment, the P-CSCF indicates the attribute of "sip.app-subtype" having a value of "webrtc-datachannel" (i.e., +sip.app-subtype="webrtc-datachannel") in the Feature-Caps header field of the SIP "200 OK" response.

With the transmissions of the data channel capability indication between the UE and the P-CSCF, the UE knows if the network supports the IMS data channel, and can request the IMS network to establish a data channel media in an IMS session accordingly.

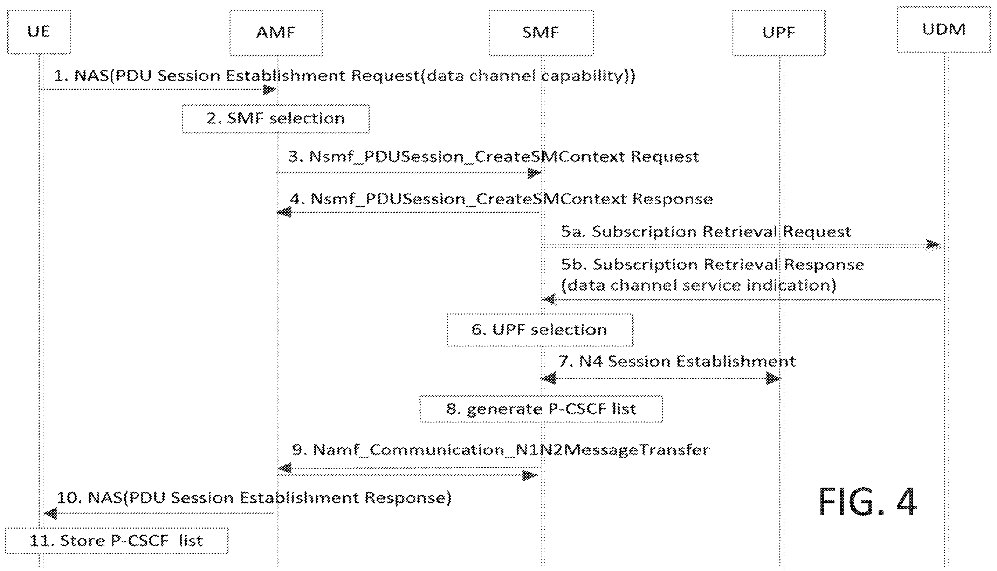

FIG. 4 shows schematic diagram of a PDU session establishment procedure according to an embodiment of the present disclosure. In this embodiment, at least one P-CSCF supporting the IMS data channel is selected and returned to the IMS UE.

Many aspects of this procedure are similar to the procedure corresponding to the FIG. 2 and can be ascertained by referring to the paragraphs above. The procedure includes:
1. The UE transmits to the AMF the NAS Message (e.g., including at least one of S-NSSAI(s), a UE Requested DNN, a PDU Session ID, a Request type, an N1 SM container (e.g., including a PDU Session Establishment Request)).

In an embodiment, the PDU Session Establishment Request is included in the NAS message and encapsulated in the N1 SM container. In an embodiment, the NAS message sent by the UE is encapsulated by the RAN (Radio Access Network) in a N2 message towards the AMF.

In an embodiment, if the PDU session is used for the IMS service, the UE may provide an IMS well-known DNN (e.g., the parameter or IE (information element) DNN is "IMS") (e.g., a well-known DNN used for the IMS service) to the network.

In an embodiment, if the UE requests the P-CSCF address allocation from the network, the NAS message may carry an appropriate P-CSCF request indication (e.g., a "P-CSCF IPv4 Address request" or a "P-CSCF IPv6 Address Request") in the PCO (Protocol Configuration Options) IE. In an embodiment, the PCO IE is transparently forwarded by the AMF to the SMF, so that the SMF can return the P-CSCF address list accordingly.

In addition, the UE may carry a data channel capability indication, together with the P-CSCF request indication, in the PCO to be sent to the SMF. In an embodiment, data channel capability indication may indicate that the UE has the data channel capability (e.g., supports the IMS data channel).

Steps 2 to 4 in the embodiments corresponding to FIG. 4 are identical to steps 2 to 4 corresponding to FIG. 2.

5a. The SMF sends an *Nudm_SDM_Get* Request to the UDM, to retrieve Session Management Subscription data. The UDM sends the requested data in a response message.

5b. The UDM sends a Subscription Retrieval Response message to the SMF, carrying the Session Management Subscription data of the UE.

In an embodiment, within the Session Management Subscription data, a data channel service indication may be present, which indicates the UE is subscribed with data channel service. In an embodiment, the data channel service indication may be associated to a specific DNN (e.g., the well-known DNN used for the IMS service). In an embodiment, the data channel service indication may be included in the DNN configuration data, e.g., within the configuration of *DnnConfiguration,* an attributed of *dataChannelAllowed* is present with a true or false value.

In an alternative embodiment, the UDM may transmit an IMS service indication to the SMF. For example, an operator may not explicitly configure the data channel service indication in the UDM, but implicitly indicates that a supporting IMS service may also support the data channel service.

Steps 6 and 7 in the embodiments corresponding to FIG. 4 are identical to steps 6 and 7 corresponding to FIG. 2.

8. If the SMF receives the P-CSCF address request from the UE in step 1, i.e., receives the PCO IE including the appropriate P-CSCF request indication (e.g., a "P-CSCF IPv4 Address Request" or a "P-CSCF IPv6 Address Request" indication), it may generate a list of appropriate P-CSCF IP address to be returned to the UE.

In an embodiment, the SMF may receive the data channel capability indication provided by the UE as described in step 1, or receive data channel service indication as described in step 5b. In an embodiment, the SMF may determine that at least one P-CSCF supporting the IMS data channel may be returned to the UE, based on at least one of following information: the well-known DNN used for IMS service (e.g., the parameter or IE (information element) DNN is "IMS"), the IMS service indication from the UDM, the data channel capability provided by the UE, and/or the data channel service indication received from the UDM.

In an embodiment, the SMF may take the following methods to determine how to generate the P-CSCF address list:
a) In an embodiment, the SMF may take the DNN into account when generating the P-CSCF address list. For example, an operator may only configure the IMS data channel service running on the IMS PDU session (e.g., using the well-known DNN used for the IMS service). In this case, the SMF may check whether the DNN is the well-known DNN used for the IMS service. If not, according to the operator policy, the SMF may not return a P-CSCF with the data channel support capability.
b) In an embodiment, the SMF may take the data channel service indication received from the UDM into account when generating the P-CSCF address list. For example, the data channel service indication received from the UDM may indicate that the UE does not have a subscription with the IMS data channel server (e.g., the value of the parameter *dataChannelAllowed* is false). In this case, the SMF may not return a P-CSCF with the data channel capability (e.g., supports the IMS data channel).
c) In an embodiment, the SMF may take the IMS service indication from the UDM into account when generating the P-CSCF address list. For example, an operator may not explicitly configure the data channel service indication in the UDM, but implicitly indicates that a supporting IMS service may also support the data channel service. In an embodiment, the support of the IMS service may be the precondition of the data channel service.
d) In an embodiment, the SMF may check the data channel capability provided by the UE, and return at least one P-CSCF with the data channel capability if the UE has indicated its data channel capability.

In an embodiment, if at least one of P-CSCFs supporting the IMS data channel need to be returned, the SMF may generate the P-CSCF address list using one of the following methods:
a) only including one of more P-CSCFs with the data channel capability into the P-CSCF address list (i.e., all P-CSCF(s) on the P-CSCF address list have the data channel capability); and
b) including at least one P-CSCF with the data channel capability in the P-CSCF address list (i.e., the P-CSCF address list may have some P-CSCFs having no data channel capability), and create one or more data channel support indications associated to the P-CSCF(s) supporting the IMS data channel. In an embodiment, the data channel support indication indicates a corresponding P-CSCF having the IMS data channel capability.

Steps 9 and 10 in the embodiments corresponding to FIG. 4 are identical to steps 9 and 10 corresponding to FIG. 2.

11. If a list of P-CSCF address is included in the PCO returned by the SMF within the PDU Session Establishment Accept message, the UE stores the P-CSCF address list in its local storage.

In an embodiment, if the data channel support indication is explicitly associated to at least one of the P-CSCFs in the P-CSCF address list, the UE may get knowledge on which P-CSCF supports the IMS data channel, and can accordingly select one P-CSCF with the data channel capability if needed.

In an embodiment, if the UE has indicated its data channel capability in step 1, and there is no data channel support indication associated to any P-CSCF in the P-CSCF address list, the UE may regard all P-CSCFs in the P-CSCF address list implicitly support the IMS data channel, and accordingly randomly selects one P-CSCF in the P-CSCF address list for use.

With the embodiments described above, the network gets knowledge that at least one P-CSCF supporting the IMS data channel is needed be returned to the UE, and thus can generate correct P-CSCF address list including at least one P-CSCF supporting the IMS data channel. Accordingly, the UE is able to get at least one P-CSCF supporting the IMS data channel from the network, so that unnecessary IMS registration retries can be avoided.

In an embodiment, if the SMF generates the P-CSCF list based on its local storage of P-CSCF information, the P-CSCF information stored in the SMF may indicate which P-CSCF has the data channel support capability.

In some embodiments, the retrieval of the P-CSCF information may be done through a DNS query sent to the DNS Server. In an embodiment, the DNS (Domain Name System) Server is configured with a list of P-CSCFs within its DNS records and some P-CSCFs are associated with a specific service parameter indicating the data channel support capability of the P-CSCFs.

In an embodiment, the SMF may try to fetch a list of P-CSCFs from the DNS server if the SMF is not configured with the P-CSCF information. In an embodiment, the SMF may act as a DNS client and send a DNS query request to the DNS server. In an embodiment, the DNS query request may include a specific DNS service parameter to indicate that one or more requested P-CSCFs need to have data channel capability. In an embodiment, by checking the DNS service parameter provided by the DNS client (e.g., the SMF), the DNS server my return a list of P-CSCFs which have the data channel support.

In an embodiment, a UE may try to fetch a list of P-CSCFs from the DNS server if the UE has received the DNS server address from the network (e.g., during the PDU session establishment procedure). In an embodiment, the UE may act as a DNS client and sends a DNS query request to the DNS server. In an embodiment, the DNS query request may include a specific DNS service parameter to indicate that one or more requested P-CSCFs need to have data channel capability. In an embodiment, by checking the DNS service parameter provided by the DNS client (e.g., the UE), the DNS server my return a list of P-CSCFs which have the data channel support.

In accordance with an embodiment of the present disclosure, a method of a P-CSCF address assignment, applied to a UE, comprises: sending, a P-CSCF address request indication, to a session management function in a packet core network; and receiving, from the session management function, a P-CSCF address list in which at least one P-CSCF has the data channel capability.

In an embodiment, the operation of sending the P-CSCF address request indication comprises: sending a PDU session establishment request, in which the P-CSCF address indication is carried in the protocol configuration options.

In an embodiment, the operation of sending a P-CSCF address request indication further comprises: sending the data channel capability indication and carrying the indication in the protocol configuration options (PCO).

In an embodiment, in the P-CSCF address list, at least one P-CSCF is associated with the data channel support indication.

In accordance with an embodiment of the present disclosure, a method of a P-CSCF address assignment, applied to an SMF, comprises: receiving, from an UE, a P-CSCF address request indication; and sending, to the UE, a P-CSCF address list in which at least one P-CSCF has the data channel capability.

In an embodiment, the operation of receiving the P-CSCF address request indication comprises: receiving a PDU session establishment request, in which the P-CSCF address indication is carried in the protocol configuration options.

In an embodiment, before sending a P-CSCF address list, the method comprises at least one of: receiving a well-known DNN for an IMS service from the UE; receiving a data channel capability indication from the UE; and/or receiving a data channel service indication from the unified data management function.

In an embodiment, the method further comprises: generating a P-CSCF address list, in which at least one P-CSCF has the data channel capability, based on at least one of the following information: the well-known DNN for IMS service, the data channel capability indication from the UE, and/or a data channel service indication from the UDM.

In an embodiment, in the P-CSCF address list, at least one P-CSCF is associated with the data channel support indication.

In accordance with an embodiment of the present disclosure, a wireless communication method comprises: transmitting, by a wireless communication terminal (e.g., the UE described above) to a session management node terminal (e.g., the SMF described above), a Proxy Call Service Control Function, P-CSCF, address request indication; and receiving, by the wireless communication terminal from the session management node, a P-CSCF address list in response to the P-CSCF address request indication, wherein at least one P-CSCF indicated in the P-CSCF address list has a data channel capability.

In an embodiment, the at least one P-CSCF indicated in the P-CSCF address list is associated with a data channel support indication.

In accordance with an embodiment of the present disclosure, a wireless communication method comprises: receiving, by a session management node (e.g., the SMF described above) from a wireless communication terminal (e.g., the UE described above), a Proxy Call Service Control Function, P-CSCF, address request indication; and transmitting, by the session management node to the wireless communication terminal, a first P-CSCF address list (e.g., the P-CSCF address list transmitted from the SMF to the UE described above) in response to the P-CSCF address request indication, wherein at least one P-CSCF indicated in the first P-CSCF address list has a data channel capability.

In an embodiment, the session management node receives a second P-CSCF address list from (e.g., the P-CSCF address list transmitted from the DNS server to the SMF described above) a Domain Name System, DNS server, wherein at least one P-CSCF indicated in the second P-CSCF address list has a data channel capability.

In accordance with an embodiment of the present disclosure, a wireless communication method comprises: transmitting, by a Domain Name System, DNS, server to a DNS client (e.g., the UE or the SMF described above), a P-CSCF address list, wherein at least one P-CSCF indicated in the P-CSCF address list has a data channel capability.

In accordance with an embodiment of the present disclosure, a wireless communication method comprises: receiving, by a Domain Name System, DNS, client (e.g., the UE or the SMF described above) from a DNS server, a P-CSCF address list, wherein at least one P-CSCF indicated in the P-CSCF address list has a data channel capability.

Details of the wireless communication methods can be ascertained by referring to the embodiment described above,

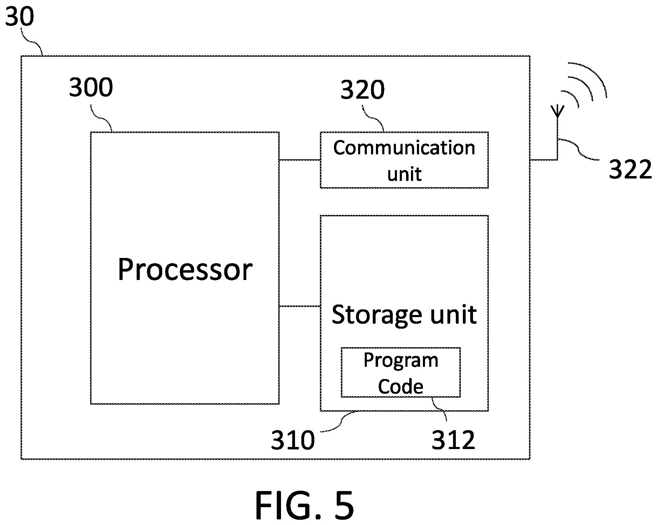

FIG. 5 relates to a diagram of a wireless communication terminal 30 according to an embodiment of the present disclosure. The wireless communication terminal 30 may be a tag, a mobile phone, a laptop, a tablet computer, an electronic book or a portable computer system and is not limited herein. The wireless communication terminal 30 may include a processor 300 such as a microprocessor or Application Specific Integrated Circuit (ASIC), a storage unit 310 and a communication unit 320. The storage unit 310 may be any data storage device that stores a program code 312, which is accessed and executed by the processor 300. Embodiments of the storage code 312 include but are not limited to a subscriber identity module (SIM), read-only memory (ROM), flash memory, random-access memory (RAM), hard-disk, and optical data storage device. The communication unit 320 may a transceiver and is used to transmit and receive signals (e.g., messages or packets) according to processing results of the processor 300. In an embodiment, the communication unit 320 transmits and receives the signals via at least one antenna 322.

In an embodiment, the storage unit 310 and the program code 312 may be omitted and the processor 300 may include a storage unit with stored program code.

The processor 300 may implement any one of the steps in exemplified embodiments on the wireless communication terminal 30, e.g., by executing the program code 312.

The communication unit 320 may be a transceiver. The communication unit 320 may as an alternative or in addition be combining a transmitting unit and a receiving unit configured to transmit and to receive, respectively, signals to and from a wireless communication node.

In some embodiments, the wireless communication terminal 30 may be used to perform the operations of the UE described above. In some embodiments, the processor 300 and the communication unit 320 collaboratively perform the operations described above. For example, the processor 300 performs operations and transmit or receive signals, message, and/or information through the communication unit 320.

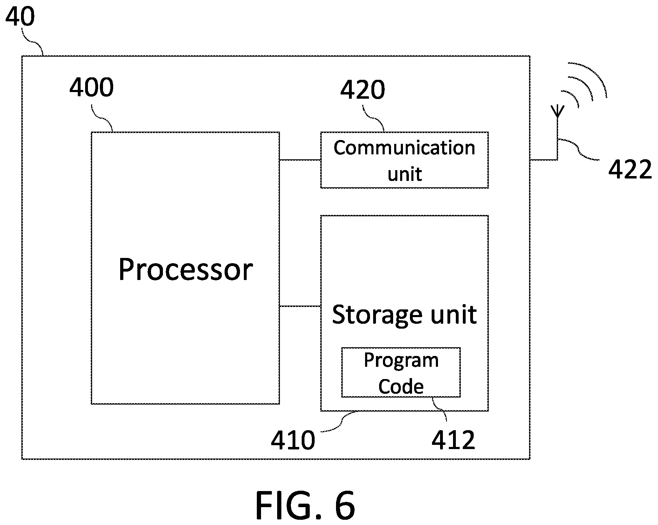

FIG. 6 relates to a diagram of a wireless communication node 40 (e.g., a session management node) according to an embodiment of the present disclosure. The wireless communication node 40 may be a satellite, a base station (BS), a gNB, a network entity, a Domain Name System (DNS) server, a Mobility Management Entity (MME), Serving Gateway (S-GW), Packet Data Network (PDN) Gateway (P-GW), a radio access network (RAN), a next generation RAN (NG-RAN), a data network, a core network, a communication node in the core network, or a Radio Network Controller (RNC), and is not limited herein. In addition, the wireless communication node 40 may include (perform) at least one network function such as an access and mobility management function (AMF), a session management function (SMF), a user place function (UPF), a policy control function (PCF), an application function (AF), etc. The wireless communication node 40 may include a processor 400 such as a microprocessor or ASIC, a storage unit 410 and a communication unit 420. The storage unit 410 may be any data storage device that stores a program code 412, which is accessed and executed by the processor 400. Examples of the storage unit 412 include but are not limited to a SIM, ROM, flash memory, RAM, hard-disk, and optical data storage device. The communication unit 420 may be a transceiver and is used to transmit and receive signals (e.g., messages or packets) according to processing results of the processor 400. In an example, the communication unit 420 transmits and receives the signals via at least one antenna 422.

In an embodiment, the storage unit 410 and the program code 412 may be omitted. The processor 400 may include a storage unit with stored program code.

The processor 400 may implement any steps described in exemplified embodiments on the wireless communication node 40, e.g., via executing the program code 412.

The communication unit 420 may be a transceiver. The communication unit 420 may as an alternative or in addition be combining a transmitting unit and a receiving unit configured to transmit and to receive, respectively, signals, messages, or information to and from a wireless communication node or a wireless communication terminal.

In some embodiments, the wireless communication node 40 may be used to perform the operations of the SMF or the DNS server described above. In some embodiments, the processor 400 and the communication unit 420 collaboratively perform the operations described above. For example, the processor 400 performs operations and transmit or receive signals through the communication unit 420.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. A wireless communication method, **characterised in that** it comprises:
transmitting (1), by a wireless communication terminal to a session management node, a Proxy Call Service Control Function, P-CSCF, address request indication; and
receiving (10), by the wireless communication terminal from the session management node, a P-CSCF address list in response to the P-CSCF address request indication, wherein at least one P-CSCF indicated in the P-CSCF address list has a data channel capability.

2. The wireless communication method of claim 1, wherein the P-CSCF address request indication is carried in a Protocol Configuration Options, PCO, information element, IE.

3. The wireless communication method of claim 1 or 2, wherein the wireless communication terminal transmits a data channel capability indication to the session management node.

4. The wireless communication method of claim 3, wherein the data channel capability indication is carried in a PCO IE.

5. A wireless communication method comprising:
receiving (1), by a session management node from a wireless communication terminal, a Proxy Call Service Control Function, P-CSCF, address request indication; and
transmitting (10) , by the session management node to the wireless communication terminal, a first P-CSCF address list in response to the P-CSCF address request indication, wherein at least one P-CSCF indicated in the first P-CSCF address list has a data channel capability.

6. The wireless communication method of claim 5, wherein the P-CSCF address request indication is carried in a Protocol Configuration Options, PCO, information element, IE.

7. The wireless communication method of claim 5 or 6, wherein the session management node receives a data network name, DNN, for an IP Multimedia Subsystem, IMS, service from the wireless communication terminal.

8. The wireless communication method of any of claims 5 to 7, wherein the session management node receives a data channel capability indication from the wireless communication terminal.

9. The wireless communication method of claim 8, wherein the at least one P-CSCF address on the first P-CSCF address list is associated with the data channel support indication.

10. The wireless communication method of any of claims 5 to 9, wherein the session management node receives a IMS service indication from a unified data management function.

11. The wireless communication method of any of claims 5 to 10, wherein the session management node receives a data channel service indication from a unified data management function.

12. A wireless communication method comprising:
transmitting (10), by a Domain Name System, DNS, server to a DNS client, a P-CSCF address list, wherein at least one P-CSCF indicated in the P-CSCF address list has a data channel capability.

13. The wireless communication method of claim 12, wherein the DNS server receives a DNS query request from the DNS client for requesting the P-CSCF address list, and a service parameter is carried in the DNS query request to indicate that one or more requested P-CSCFs need to have data channel capability.

14. A wireless communication method comprising:
receiving (10), by a Domain Name System, DNS, client from a DNS server, a P-CSCF address list, wherein at least one P-CSCF indicated in the P-CSCF address list has a data channel capability.

15. The wireless communication method of claim 14, wherein the DNS client transmits a DNS query request to the DNS server for requesting the P-CSCF address list, and a service parameter is carried in the DNS query request to indicate that one or more requested P-CSCFs need to have data channel capability.

## Patentansprüche

1. Drahtloskommunikationsverfahren, **dadurch gekennzeichnet, dass** es umfasst:
Übertragen (1) einer Proxy-Call-Service-Control-Function-, P-CSCF-, Adressanforderungsanzeige durch ein Drahtloskommunikations-Endgerät an einen Sitzungsverwaltungsknoten; und
Empfangen (10) einer P-CSCF-Adressliste durch das Drahtloskommunikations-Endgerät von dem Sitzungsverwaltungsknoten als Antwort auf die P-CSCF-Adressanforderungsanzeige, wobei mindestens eine in der P-CSCF-Adressliste angezeigte P-CSCF eine Datenkanalfähigkeit aufweist.

2. Drahtloskommunikationsverfahren nach Anspruch 1, wobei die P-CSCF-Adressanforderungsanzeige in einem Protocol-Configuration-Options-, PCO-, Informationselement, IE, übermittelt wird.

3. Drahtloskommunikationsverfahren nach Anspruch 1 oder 2, wobei das Drahtloskommunikations-Endgerät eine Datenkanalfähigkeitsanzeige an den Sitzungsverwaltungsknoten überträgt.

4. Drahtloskommunikationsverfahren nach Anspruch 3, wobei die Datenkanalfähigkeitsanzeige in einem PCO-IE übermittelt wird.

5. Drahtloskommunikationsverfahren, umfassend:
Empfangen (1) einer Proxy-Call-Service-Control-Function-, P-CSCF-, Adressanforderungsanzeige durch einen Sitzungsverwaltungsknoten von einem Drahtloskommunikations-Endgerät; und
Übertragen (10) einer ersten P-CSCF-Adressliste durch den Sitzungsverwaltungsknoten als Antwort auf die P-CSCF-Adressanforderungsanzeige an das Drahtloskommunikations-Endgerät, wobei mindestens eine in der ersten P-CSCF-Adressliste angezeigte P-CSCF eine Datenkanalfähigkeit aufweist.

6. Drahtloskommunikationsverfahren nach Anspruch 5, wobei die P-CSCF-Adressanforderungsanzeige in einem Protocol-Configuration- Options-, PCO-, Informationselement, IE, übermittelt wird.

7. Drahtloskommunikationsverfahren nach Anspruch 5 oder 6, wobei der Sitzungsverwaltungsknoten einen Datennetzwerknamen, DNN, für einen IP Multimedia Subsystem-, IMS-, Dienst von dem Drahtloskommunikations-Endgerät empfängt.

8. Drahtloskommunikationsverfahren nach einem der Ansprüche 5 bis 7, wobei der Sitzungsverwaltungsknoten eine Datenkanalfähigkeitsanzeige von dem Drahtloskommunikations-Endgerät empfängt.

9. Drahtloskommunikationsverfahren nach Anspruch 8, wobei die mindestens eine P-CSCF-Adresse in der ersten P-CSCF-Adressliste mit der Datenkanalunterstützungsanzeige verknüpft ist.

10. Drahtloskommunikationsverfahren nach einem der Ansprüche 5 bis 9, wobei der Sitzungsverwaltungsknoten eine IMS-Dienstanzeige von einer vereinheitlichten Datenverwaltungsfunktion empfängt.

11. Drahtloskommunikationsverfahren nach einem der Ansprüche 5 bis 10, wobei der Sitzungsverwaltungsknoten eine Datenkanal-Dienstanzeige von einer vereinheitlichten Datenverwaltungsfunktion empfängt.

12. Drahtloskommunikationsverfahren, umfassend:
Übertragen (10) einer P-CSCF-Adressliste durch einen Domänennamensystem-, DNS-, Server an einen DNS-Client, wobei mindestens eine in der P-CSCF-Adressliste angezeigte P-CSCF eine Datenkanalfähigkeit aufweist.

13. Drahtloskommunikationsverfahren nach Anspruch 12, wobei der DNS-Server eine DNS-Abfrageanforderung von dem DNS-Client zum Anfordern der P-CSCF-Adressliste empfängt, und in der DNS-Abfrageanforderung ein Dienstparameter übermittelt wird, um anzuzeigen, dass eine oder mehrere angeforderte P-CSCFs Datenkanalfähigkeit aufweisen müssen.

14. Drahtloskommunikationsverfahren, umfassend:
Empfangen (10) einer P-CSCF-Adressliste durch einen Domänennamensystem-, DNS-, Client von einem DNS-Server, wobei mindestens eine in der P-CSCF-Adressliste angezeigte P-CSCF eine Datenkanalfähigkeit aufweist.

15. Drahtloskommunikationsverfahren nach Anspruch 14, wobei der DNS-Client eine DNS-Abfrageanforderung zum Anfordern der P-CSCF-Adressliste an den DNS-Server überträgt, und in der DNS-Abfrageanforderung ein Dienstparameter übermittelt wird, um anzuzeigen, dass eine oder mehrere angeforderte P-CSCFs Datenkanalfähigkeit aufweisen müssen.

## Revendications

1. Procédé de communication sans fil, **caractérisé en ce qu'**il comprend :
la transmission (1), par un terminal de communication sans fil à un nœud de gestion de session, d'une indication de demande d'adresse de fonction de contrôle de service d'appel proxy, P-CSCF ; et
la réception (10), par le terminal de communication sans fil à partir du nœud de gestion de session, d'une liste d'adresses de P-CSCF en réponse à l'indication de demande d'adresse de P-CSCF, dans lequel au moins une P-CSCF indiquée dans la liste d'adresses de P-CSCF présente une capacité de canal de données.

2. Procédé de communication sans fil selon la revendication 1, dans lequel l'indication de demande d'adresse de P-CSCF est transportée dans un élément d'informations, IE, d'options de configuration de protocole, PCO.

3. Procédé de communication sans fil selon la revendication 1 ou 2, dans lequel le terminal de communication sans fil transmet une indication de capacité de canal de données au nœud de gestion de session.

4. Procédé de communication sans fil selon la revendication 3, dans lequel l'indication de capacité de canal de données est transportée dans un IE PCO.

5. Procédé de communication sans fil comprenant :
la réception (1), par un nœud de gestion de session à partir d'un terminal de communication sans fil, d'une indication de demande d'adresse de fonction de contrôle de service d'appel proxy, P-CSCF ; et
la transmission (10), par le nœud de gestion de session au terminal de communication sans fil, d'une première liste d'adresses de P-CSCF en réponse à l'indication de demande d'adresse de P-CSCF, dans lequel au moins une P-CSCF indiquée dans la première liste d'adresses de P-CSCF présente une capacité de canal de données.

6. Procédé de communication sans fil selon la revendication 5, dans lequel l'indication de demande d'adresse de P-CSCF est transportée dans un élément d'informations, IE, d'options de configuration de protocole, PCO.

7. Procédé de communication sans fil selon la revendication 5 ou 6, dans lequel le nœud de gestion de session reçoit un nom de réseau de données, DNN, pour un service de sous-système multimédia IP, IMS, à partir du terminal de communication sans fil.

8. Procédé de communication sans fil selon l'une quelconque des revendications 5 à 7, dans lequel le nœud de gestion de session reçoit une indication de capacité de canal de données à partir du terminal de communication sans fil.

9. Procédé de communication sans fil selon la revendication 8, dans lequel la au moins une adresse de P-CSCF dans la première liste d'adresses de P-CSCF est associée à l'indication de prise en charge de canal de données.

10. Procédé de communication sans fil selon l'une quelconque des revendications 5 à 9, dans lequel le nœud de gestion de session reçoit une indication de service IMS à partir d'une fonction de gestion de données unifiée.

11. Procédé de communication sans fil selon l'une quelconque des revendications 5 à 10, dans lequel le nœud de gestion de session reçoit une indication de service de canal de données à partir d'une fonction de gestion de données unifiée.

12. Procédé de communication sans fil comprenant :
la transmission (10), par un serveur de système de noms de domaine, DNS, à un client DNS, d'une liste d'adresses de P-CSCF, dans lequel au moins une P-CSCF indiquée dans la liste d'adresses de P-CSCF présente une capacité de canal de données.

13. Procédé de communication sans fil selon la revendication 12, dans lequel le serveur DNS reçoit une demande d'interrogation de DNS à partir du client DNS pour demander la liste d'adresses de P-CSCF, et un paramètre de service est transporté dans la demande d'interrogation de DNS pour indiquer qu'une ou plusieurs P-CSCF demandées doivent présenter une capacité de canal de données.

14. Procédé de communication sans fil comprenant :
la réception (10), par un client de système de noms de domaine, DNS, à partir d'un serveur DNS, d'une liste d'adresses de P-CSCF, dans lequel au moins une P-CSCF indiquée dans la liste d'adresses de P-CSCF présente une capacité de canal de données.

15. Procédé de communication sans fil selon la revendication 14, dans lequel le client DNS transmet une demande d'interrogation de DNS au serveur DNS pour demander la liste d'adresses de P-CSCF, et un paramètre de service est transporté dans la demande d'interrogation de DNS pour indiquer qu'une ou plusieurs P-CSCF demandées doivent présenter une capacité de canal de données.
